# EUROPEAN PATENT SPECIFICATION

(11) **EP 0 273 513 B1**
(45) Date of publication and mention of the grant of the patent: **24.02.1993**
(21) Application number: 87202524.2
(22) Date of filing: 15.12.1987
(51) Int. Cl.: A01D 78/10, A01B 59/043, A01D 67/00

(54) **An agricultural machine**
Landmaschine
Machine agricole

(30) Priority: 23.12.1986 NL 8603268; 29.05.1987 NL 8701275; 30.09.1987 NL 8702328
(43) Date of publication of application: 06.07.1988
(60) Divisional application: 90203511.2
(73) Proprietor: C. van der Lely N.V., NL-3155 PD Maasland (NL)
(72) Inventor: Van der Lely, Edwin, Maasland (NL); Bom, Cornelis Joahnnes Gerardus, Rozenburg (NL)
(74) Representative: Mulder, Herman

(56) References cited:
- DE-A- 1 557 877
- DE-A- 1 932 785
- DE-A- 2 931 656
- DE-B- 1 102 464
- DE-B- 1 228 842
- FR-A- 2 454 255
- US-A- 2 872 990
- US-A- 4 202 160

## Description

The invention relates to an agricultural machine which can be coupled to a tractor by means of a connecting element, which machine, during operation, bears on the soil by means of supporting members, the machine further being provided with a coupling device, with the aid of which the machine is pivotal relative to said connecting element about an upwardly directed virtual axis which, seen in plan view, is located in front of the connecting element.

A machine of this type is known from DE-A-19 32 785. Said machine is provided with a locking bar, by means of which the (quadrilateral) coupling device is fixated. With the aid of the locking bar the coupling device is lockable in different positions, being the transport position of the machine and one or more operating positions of the machine.

The above-described construction of the coupling device has the disadvantage that the machine is not able to follow the path of the tractor, when e.g. making a turn. The invention has for its object to provide a machine which is able to follow the path of the tractor propelling the machine, provided that such a machine, during operation, maintains a favourable dynamic behaviour.

According to the invention this is achieved in that the machine, during operation, is freely pivotable around said axis, while the coupling device is provided with arms of equal length, connecting the machine to the connecting element.

Hereby it can be achieved that, even with only slight deviations from the desired working position of the machine, sufficiently large moments occur to return the machine to its working position without the machine being given a continuous, annoying oscillating movement which corresponds to its own frequency about the virtual axis.

However, the above idea of free pivotability is known per se, e.g. from DE-A-15 57 877 and DE-B-12 28 842, those machines do not have the required dynamic behaviour.

For a better understanding of the invention and to show how the same may be carried into effect, reference will now be made, by way of example, to the accompanying drawings of some advantageous embodiments of the machine according to the invention, in which drawings:
Figure 1 is a plan view of a machine coupled to a tractor in a position deviating from the normal working position;
Figure 2 is a plan view of a second embodiment of a machine according to the invention in a normal working position;
Figure 3 is a side view of the machine shown in Figure 2;
Figure 4 is a plan view of the machine as shown in Figures 2 and 3 in a position deviating from the normal position shown in Figure 2;
Figure 5 is a plan view of the invention used in a machine operating as a side-delivery rake, shown in a normal working position;
Figure 6 is a plan view of part of the machine shown in Figure 2, which machine is additionally provided with a locking device;
Figure 7 is a side view of the part of the machine as shown in Figure 6;
Figure 8 is a plan view of part of a machine shown in Figure 2, which machine is provided with a second embodiment of a locking device;
Figure 9 is a side view taken in the direction of the arrow IX in Figure 8;
Figure 10 is a rear view taken in the direction of the arrow X in Figure 9;
Figure 11 is partly a cross-section and partly a view taken along the lines XI-XI in Figure 10;
Figure 12 is a cross-section taken along the lines XII-XII in Figure 11, and
Figure 13 is a cross-section taken along the lines XIII-XIII in Figure 11 of an additional locking to either of the two preceding machine lockings destined for a transportation position.

The invention relates to a coupling of an agricultural machine to a tractor propelling same. In an embodiment shown in the drawings as a rotary haymaking machine, the said machine comprises a straight frame beam 1 wherein, at least in this embodiment, there are bearing-supported four adjacently arranged rake members 3 which are rotatable about upwardly directed axes of rotation 2. The rake members 3 are drivable in a known per se manner from a power take-off shaft of a tractor 4 hauling the machine by means of an intermediate shaft 5 connected to an input shaft 6 of the machine. The rake members 3 are pair-wise drivable in the opposite sense of rotation B.

In accordance with this embodiment, the machine is supported by means of four ground wheels 7 whose axes of rotation 8, during operation, have a fixed position relative to the frame 1 of the machine; said ground wheel axes 8 extend parallel to the frame beam 1. The centres of the surfaces, by means of which the four ground wheels bear on the soil during operation, are situated on a line extending parallel to the frame beam 1 and being denoted in the drawings by reference numeral 9. In general, an agricultural machine according to the invention may be supported by other supporting members 7, e.g. supporting discs, which are likewise in a fixed position relative to the machine frame.

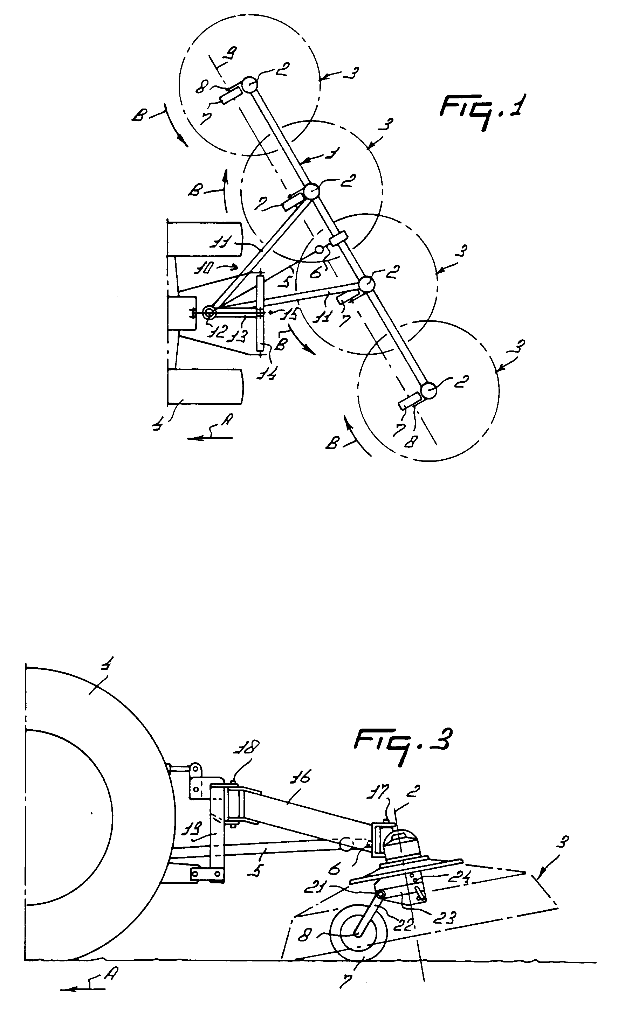

The machine as shown in Figure 1 is connected to the lifting hitch of the tractor 4 by means of a coupling device 10. The coupling device 10 includes two forwardly converging arms 11, whose rear ends are connected to the frame beam 1 at some interspace. The front ends of the arms 11 are connected to a sleeve which pivotally bears an upwardly directed pivot shaft 12. The pivot shaft 12 is rigidly connected to an approximately horizontal carrier 13 which from said pivot shaft extends rearwardly relative to the direction of operative travel. At its rear end, the carrier 13 is rigidly connected to a three-point trestle 14 which also constitutes part of the coupling device 10 (and can be coupled to the three connecting points of a three-point lifting hitch of the tractor), or to an approximately horizontal lift link drawbar 14 which interconnects the connecting points of the lower lifting arms. Consequently, during operation, the machine is pivotal as a whole about the upwardly directed shaft 12 which, taken in the direction of operative travel, is arranged at some distance in front of the connecting points to the lifting hitch of the tractor.

In prior art machines including a so-called lateral flotation device, the machine is pivotal during operation about an upwardly directed shaft which in Figure 1 is denoted by reference numeral 15. Taken in the direction of operative travel A, this shaft 15 is positioned directly behind a three-point trestle. If this prior art machine has a relatively large mass, in particular a relatively large rotational moment of inertia relative to the shaft 15 (e.g. with machines having a working width exceeding approximately 4.5 m), there may occur a fidgety dynamic behaviour of the machine as a whole during operation, and in particular at relatively high speeds of travel, thus causing the machine to continuously oscillate about the shaft 15. This behaviour is highly detrimental to the quality of the work done thereby.

During practical tests, the embodiment of the machine according to the inventive idea as shown in Figure 1 appeared to have a highly improved dynamic behaviour, so that even at very high speeds for machines of this type hardly any oscillations about the pivot shaft 12 could be observed. The machine of Figure 1 has the same working width as the one having the above-described drawback, but the distance between the centre line of the pivot shaft 12 and the line 9 (whereon, in a plan view, also the gravitational centre of the entire machine is approximately located) is approximately 50% greater than that between the centre line of the pivot shaft 15 and the line 9 in the prior art machine at otherwise identical dimensions. The distance between the trestle 14 and the frame beam 1 is the same in both cases.

However, the constructional embodiment of the machine of Figure 1 is disadvantageous in that, seen in plan view, a portion of the space between the lifting arms of the tractor is occupied by parts of the coupling device 10.

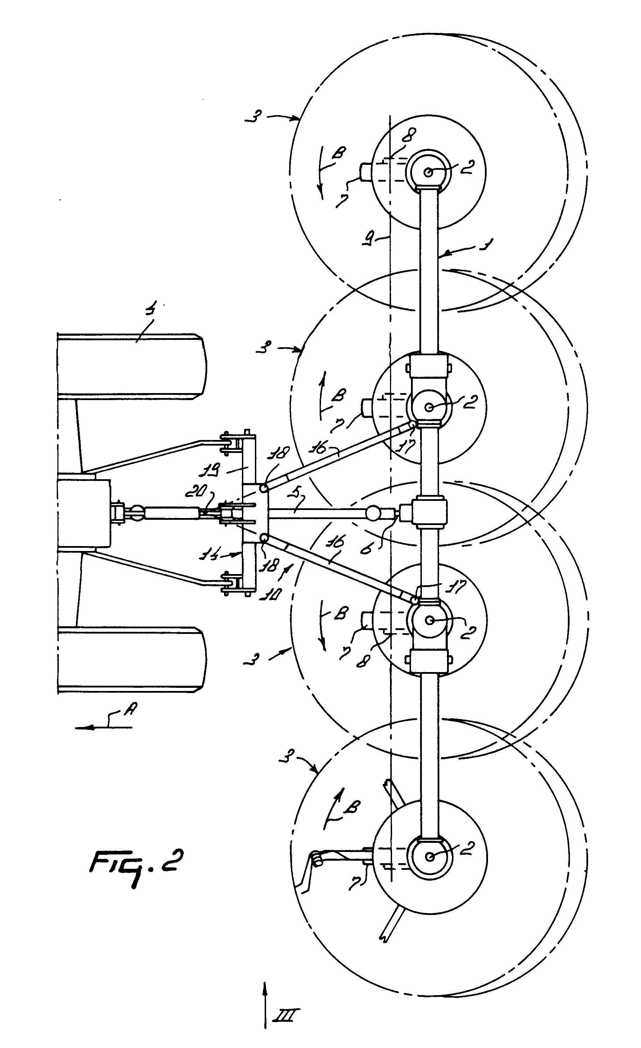

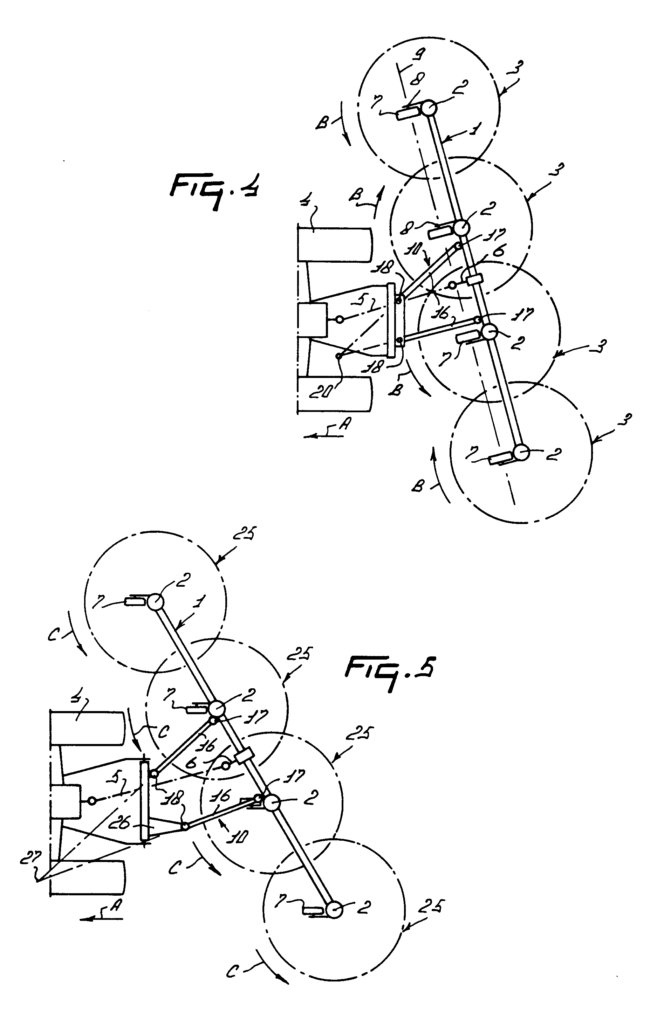

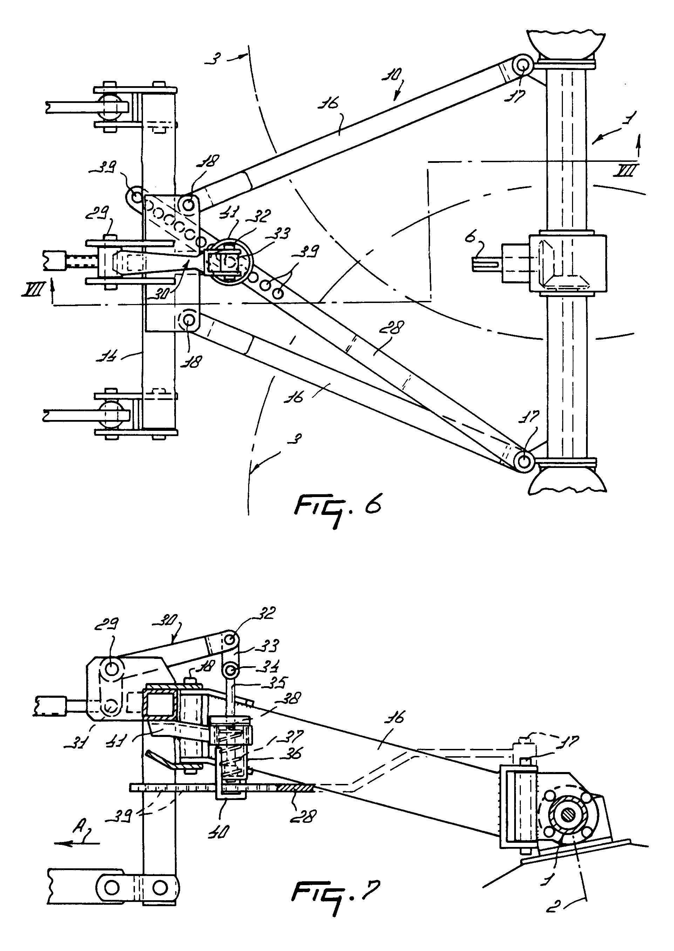

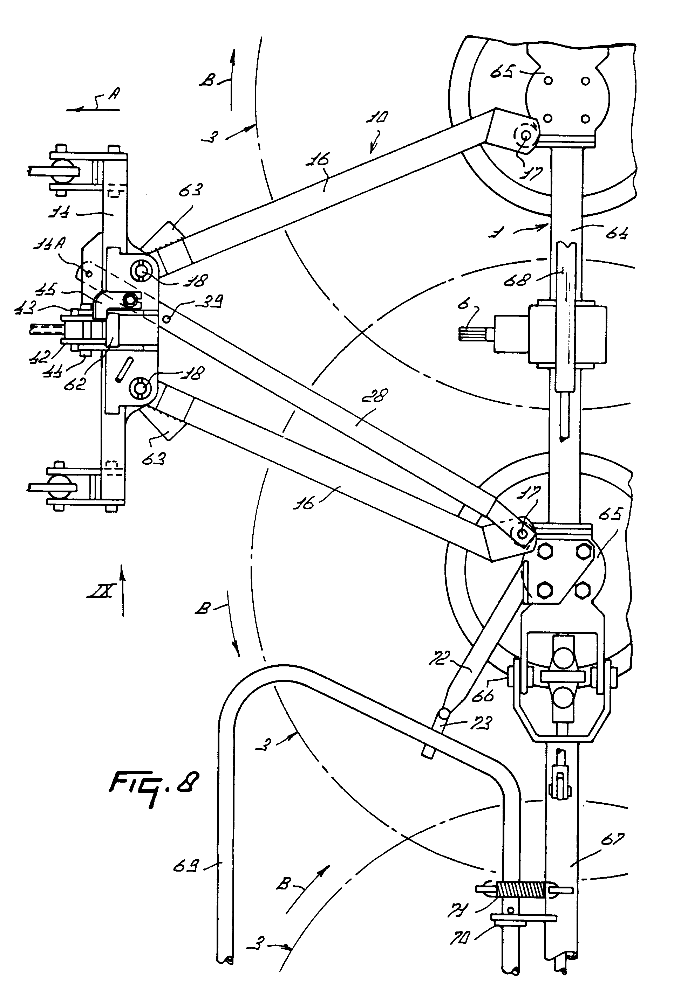

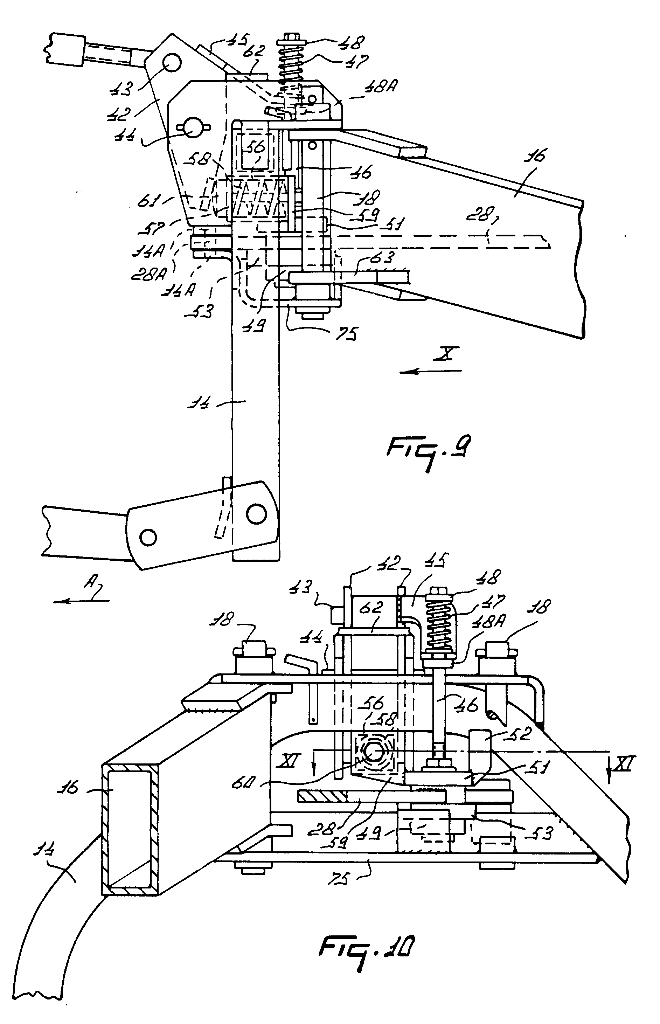

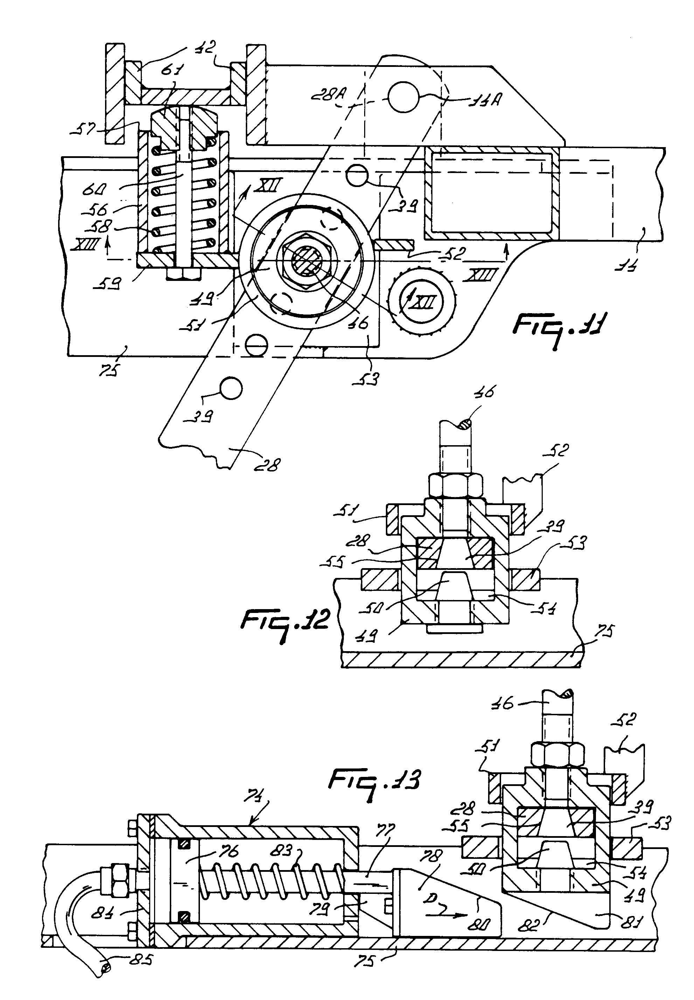

Figures 2 and 3 show an embodiment wherein the said disadvantage does not occur. This machine is provided with a coupling device 10 comprising arms 16 which converge in the direction of operative travel and have their rear ends pivotally connected to the frame beam 1 by means of upwardly extending pivot shafts 17. The front ends of the arms 16 are fastened near the top side of a three-point trestle 19 by means of pivot shafts 18 extending parallel to the pivot shafts 17. The trestle 19 can be coupled to the two lower lifting arms and to the upper lifting arm of the lifting hitch 14 of the tractor. However, the front ends of the arms 16 may also be connected by means of the pivot shafts 18 to a horizontal beam which, during operation, is only coupled to the rear ends of the lower lifting arms.

In the normal operating position of the machine, wherein the frame beam 1 extends perpendicularly to the direction of operative travel A and the arms 16 are arranged symmetrically relative to a vertical symmetry plane of the machine taken in the direction of operative travel A, a connecting line through the centre lines of the pivot shafts 18 extends, seen in plan view, parallel to a connecting line through the centre lines of the pivot shafts 17 and also parallel to the frame beam 1. The distance between the pivot shafts 18 is approximately 30% of that between the pivot shafts 17. In this embodiment, seen in plan view, the distance between a line through the pivot shafts 18 and one through the pivot shafts 17 is approximately 85% of the distance between the pivot shafts 17, but these values, according to the embodiment, are not imperative for the inventive idea.

In contradistinction to the embodiment shown in Figure 1, the connections 18 of the arms 17 are located, taken in the direction of operative travel A, directly behind the trestle or the lift link drawbar 14.

The gravitational centre of the machine is located, taken in plan view, approximately on the line 9. The distance between a line through the pivot shafts 18 and the line 9 is, in plan view, approximately 75% of the distance between the pivot shafts 17. Taken in a plan view, the line 9 is located at a short distance in front of the frame beam 1. At least in this embodiment, the distance between the pivot shafts 17 is approximately 20% of the working width of the machine.

However, the invention is not limited to the dimensions shown in the drawings, but may also relate to a completely different dimensioning of coupling device 10 in dependence on the dimensions and the mass of the machine and also on the type of machine.

Taken in plan view as shown in Figure 2, which illustrates the desired working position of the rotary haymaking machine, the centre lines of the arms 16 intersect in a point denoted by reference numeral 20. In this position of the machine, the upwardly directed axis 20 located at some distance in front of the connecting points 18 constitutes an instantaneous axis of rotation of the machine relative to the tractor, i.e. the machine pivots about this axis at a very slight pivotal movement from the centre position as shown. After the slight pivotal movement, the axis 20 has moved away from the symmetry plane and then constitutes an instantaneous pivot axis for a subsequent slight pivotal movement, etc. The position of the axis 20, after a relatively large pivotal movement has been performed, is shown in Figure 4.

In this embodiment, the distance between the pivot shaft 20 and the three-point trestle or lift link drawbar 14 is at least approximately 40% of the distance between said trestle or lift link drawbar 14 and the line 9, but may be of a smaller size in case of different working widths, masses and/or machine types.

Since the instantaneous pivot axis 20 moves, in plan view, from the symmetry plane of the tractor in a direction opposite to the one in which the gravitational point of the machine has shifted (Figure 4) and the distance between the instantaneous pivot axis 20 and the line 9 (or the gravitational centre of the machine, respectively) is significantly larger than for the prior art machine (cf. the positions of the instantaneous pivot axis 20 and that of the shaft 15 in Figure 1), the relatively large moments then produced, which moments are initiated from the soil, cause the machine to return to its centre position already after a slight pivotal movement. These moments are less with the prior art machine (pivot shaft 15 in Figure 1), because the moment arms (taken in a direction parallel to or perpendicular to the frame beam 1, respectively) are smaller. Since said moments already at small deviations from the centre position effectively return the machine of Figure 2, only comparatively small mass forces acting about the axis 20 occur, so that there is hardly any tendency to sway to the other side after the centre position has been reached.

Starting from the same lateral displacement from the centre position of the machine according to the invention and of the prior art machine, the directions of the ground wheels 7 of the machine according to the invention, which wheels assume a fixed position relative to the frame, enclose a smaller angle with the direction of operative travel than those of the prior art machine. The machine according to the invention will return to its centre position at a lower angular velocity and will hardly show any tendency to sway to the other side.

The coupling device 10 according to the invention advantageously allows of a rapid driving of turns across the field, because deviations, caused by interfering forces, from the then pivoted position relative to the tractor are suppressed in a similar manner.

As is apparent from Figure 3, the machine is provided with ground wheels 7 which are adjustable in height. For that purpose, the axis of rotation 8 of each wheel is pivotal and lockable in a plurality of positions about a pivot shaft 21 extending parallel to the frame beam 1, about which shaft is pivotal a wheel carrier 22 which carries the wheel axle 8. Rigidly connected to the wheel carrier 22 is an adjusting arm 23, whose free end can be locked in one of a plurality of apertures 24. By adjustment of the ground wheel 7, the rotary haymaking machine can be adjusted from a position suitable for tedding crop, in which position the axes of rotation 2 are inclined forwardly to a relatively high extent, to one suitable for raking, in which position the axes of rotation 2 are arranged at a lesser inclination, although not vertically. With a view to this machine adjustment, the parallel pivot shafts 17 and 18 extend relative to the surrounding construction in a direction which, seen in the side view of Figure 3, corresponds to an average position between the upright directions which the shafts would assume in each of the said positions.

In the embodiment of Figure 5, a side-delivery rake is shown in its desired normal working position. The rake members 25 are all power-driven from the tractor 4 in the same direction of rotation C. During normal operation, the frame beam 1 encloses an angle differing from 90° with the direction of operative travel A. The ground wheels 7 are adjusted to the direction of travel A. Like in the embodiment shown in Figures 2 to 4, the machine includes a coupling device 10 comprising the pivot shafts 17 and 18 and the arms 16; this device 10 may have the same shape and dimensions as the one shown in Figures 2 to 4. In this embodiment, however, there is rigidly connected, during operation, to the three-point trestle 14 (or to a horizontal lift link drawbar 14) near a lateral end thereof a horizontal carrier 26 which is located at the level of the lower lifting arm of the lifting hitch; the carrier 26 extends rearwardly from the trestle or lift link drawbar 14 and is directed approximately perpendicularly thereto. One of the two pivot shafts 18 is fitted to the rear side of the carrier 26, while the other pivot shaft 18, like in the previous embodiments, is provided directly on the trestle or lift link drawbar 14. Taken in plan view, a line connecting the pivot shafts 18 extends parallel to a connecting line between the pivot shafts 17 and also parallel to the frame beam 1.

In the normal operating position, the instantaneous pivot axis, which is determined, in plan view, by the point of intersection of the two connecting lines through the pairs of pivot shafts 17 and 18, is located in the point designated by reference numeral 27. With this type of machine, it may be desirable for the instantaneous pivot axis to be located at substantially the same distance in front of the trestle or lift link drawbar 14 as the frame beam 1 is located therebehind, thus effecting a proper dynamic behaviour of the machine during operation.

The preceding embodiments relate to measures for improving the dynamic behaviour of tractor-drawn machines during driving thereof over the field in an operative position, in which connection it is essential for the machine to be freely pivotal relative to the tractor with a view to the turns to be taken. All the above-described coupling devices 10 may be employed separately, but they may alternatively constitute part of a so-called lateral flotation device which ensures that the machine, after having been lifted by a three-point lifting hitch from the tractor, is locked automatically with respect to the tractor so as to prevent a pivoting movement about the instantaneous pivot axis 20, 27, e.g. during transportation by road. Figures 6 and 7 show such a locking device suitable for the embodiment of Figure 2.

One end of a locking bar 28 is fitted pivotally about one the pivot shafts 17, about which one of the arms 16 is pivotal with respect to the frame beam 1 during operation of the machine. From the pivot shaft 17, the bar 28 is directed obliquely forwardly in such a way that, seen in plan view, it passes at a short distance behind the centre of the three-point trestle 14.

Near the upper coupling point of the trestle 14 there is bearing-supported an approximately horizontal pivot shaft 29, which is arranged at a short distance in front of the trestle and extends transversely to the direction of operative travel A.

A lever 30 is pivotal about the pivot shaft 29. One leg of the lever 30 extends downwardly from said shaft 29, while the other leg extends rearwardly therefrom and reaches to behind the trestle 14 (Figure 7). The lowermost end of the downwardly directed leg is provided with a pin 31 for coupling of the upper lifting arm to the lifting hitch. By means of a pin 32 extending parallel to the pivot shaft 29 the rearmost point of the other leg is connected pivotally to a link 33 which is located below the lever arm and itself is coupled to a downwardly directed locking pin 35 by means of a pin 34 extending parallel to the said pin 32. The lower end of the locking pin 35 projects into a cylindrical guide sleeve 36 which is in a fixed position relative to the trestle 14. The sleeve 36 envelops a pre-tensioned pressure spring 37, which at its bottom side bears on an internal shoulder provided near the lower edge of the sleeve 36 and at its upper side presses against a pin 38 inserted through the pin 35, so that the spring 37 tries to push the locking pin 35 upwardly. In this situation, the pin 38 can bear on an upper cover of the sleeve 36, the said cover constituting a stop. The lower end of the pin 35 projects slightly from the bottom of the sleeve 36 and reaches to a short distance above the upper face of the locking bar 28, which in the region near the sleeve 36 is provided with a plurality of apertures 39 extending parallel to the pin 35. In any position of the machine relative to the tractor, the bar 28 is passed just below the locking pin 35 by means of a U-shaped bracket 40 which is rigidly connected to the sleeve 36 and carries the said bar 28. The sleeve 36 is supported capable of pivoting about its centre line by a support 41 connected to the trestle 14.

During operation, the machine bears on the soil by means of its supporting members 7, while the trestle 14 is connected to the three-point lifting hitch of the tractor. In this case, the top rod of the lifting hitch does not load or hardly loads the lever 30, so that the spring 37 pushes the locking pin 35 upwardly, thus causing the pin 38 to be located against its stop. In this manner, the pin 35 is prevented from moving downwardly when the top rod is temporarily loaded shockwise during driving over uneven fields.

When the machine is lifted with the aid of the three-point lifting hitch, the top rod of the lifting hitch exercises a continuous, forward tensile force on the pin 31, thus causing the lever 30 to pivot about the pivot shaft 29 and the pin 35 to be forced downwardly, as a result of which the pre-tension of the spring 37 is overcome. Consequently, the lower end of the pin 35 is passed through one of the apertures 39, after the driver, prior to lifting, either by driving a curve or not, has previously determined the desired locked position of the machine relative to the tractor. Since, seen in plan view as shown in Figure 6, a pair of the pivot shafts 17 and 18 and the pin 35 form a triangular construction, the machine is locked relative to the tractor in the lifted position, so that oscillations about the instantaneous pivot axis 20, 27 cannot possibly occur.

Figures 8 to 12 show a second embodiment of a flotation and locking device. The reference numerals occurring therein and corresponding to those used in the foregoing relate to the same or analogous parts of the machine.

Near its two lower ends, the trestle 14 (Figure 9) is again connected pivotally to the lower arms of the three-point lifting hitch of a tractor and, near its top side, it is connected pivotally about a transverse pivot shaft 43 by means of a coupling member 42 to the upper arm of said three-point lifting hitch of the tractor. The coupling member 42 is pivotal relative to the trestle 14 by means of an approximately horizontal pivot shaft 44 directed prependicularly to the said trestle 14. The pivot shaft 44 is located below and slightly behind the pivot shaft 43. The coupling member 42 extends over some distance below the pivot shaft 44. At its rear top side, the coupling member 42 is provided with a lever 45 (Figures 9 and 10) which is directed rearwardly therefrom and which near its rear end located, seen in side view (Figure 9), behind the rear side of the trestle 14 is provided with a slotted recess that is open towards the rear. Through said slotted recess there is provided an approximately vertically directed rod 46, which extends both over some distance above the rear end of the lever 45 and over some length therebelow. The portion of the rod 46 located above said slotted recess in the lever is surrounded by a pressure spring 47 which at its lower end bears on the rear end of the lever 45 and with its top end presses against a shoulder 48 fitted on the rod 46. The rod 46 is also provided with a shoulder 48A (Figure 10) which, when the machine rests on the soil, bears against the bottom side of the lever 45. During operation, the lower end of the rod 46 is fitted rigidly, although adjustably in the axial direction of the rod, to a cylindrical cup 49 (Figure 12). The centre line of the cylindrical outer circumference of said cup coincides with that of the rod 46. The cup 49 has a cover to which the rod 46 is attached and a bottom wherein a pin 50 is screwed. The centre line of the pin 50 coincides with that of the rod 46 as well as with that of the cylindrical outer circumference of the cup 49. Taken in the axial direction, the pin 50 extends over approximately half of the axial length of the cylindrical space enclosed by the cup 49 thereinto. Taken in the upward direction, the pin 50 is tapering. At its cylindrical outer circumference, the cup 49 is passed with some clearance through a ring 51, which is attached rigidly to the trestle 14 by means of a support 52, and, at some distance below said ring 51, through a cylindrically apertured plate 53 (Figure 12), which both prevent movements perpendicular to the centre line of the cup as well as to that of the rod 46, although allowing some pivotal movement of the cup 49 about the said centre line.

At two opposite sides of its cylindrical wall, the cup 49 is provided with an approximately square aperture 54, the circumference of which two apertures, seen in Figure 12, are in alignment. The locking bar 28 is inserted through the two apertures 54 and, outside the cup 49, bears on the plate 53. Measured perpendicularly to the centre line of the rod 46, the width of the two openings 54 is slightly larger than that of the locking bar 28 as shown in Figure 11. As is apparent from Figure 12, the apertures 39 provided in the locking bar 28 in order to be able to set the various positions of the frame beam 1 in the lifted condition of the machine relative to the tractor have a tapering boundary 55 which fits about the outer boundary of the tapering pin 50. During operation of the machine, the bar 28 is located in the upper regions of the apertures 54. In this working position, the upper end face of the pin 50 extends to shortly below the lowermost boundary face of the bar 28, so that, when the ground wheels 7 of the machine bear of the soil, the bar 28 is freely movable in the cup 49 in its longitudinal direction and hence the machine is freely pivotal behind the tractor.

To the trestle 14 there is fitted a housing 56 in the shape of a tube having a square cross-section (Figures 9 to 11). The centre line of said housing 56 is directed horizontally and perpendicularly to the plane of the trestle 14. The housing 56 is arranged at some distance below the pivot shaft 44 while, seen in plan view, its front end face 57 projects beyond the frontmost boundary of the trestle 14. The centre line of the housing 56 crosses the pivot shaft 44 near the middle of the length thereof. The arrangement is such that, taken in the direction of operative travel, the lowermost part of the coupling member 42 extending below the pivot shaft 44 is positioned with its rear side in front of the end face 57 of the housing 56. The housing 56 encloses a pressure spring 58 which at its rear end bears against a bottom plate 59 of the housing 56, by means of which bottom plate the housing is rigidly attached to the trestle 14. The bottom plate 59 includes a bore through which is passed a pin 60, the centre line of which coincides with that of the housing 56 (Figure 11). The end of the spring 58 facing the coupling member 42 carries a pressure member 61 which, when the spring 58 is in unloaded condition, projects to some extent beyond the end face 57. When the pressure member 61 is loaded in the rearward direction, it can be moved into the space enclosed by the housing 56 until being flush with the end face 57 thereof.

To the top side of the trestle there is fitted a horizontal stop plate 62 (Figures 8 and 9), the frontmost boundary of which constitutes a stop for the part of the coupling member 42 located above the pivot shaft 44 when moving rearwardly.

When, during operation, the machine moves across the field, i.e. when its weight bears on the soil by means of the ground wheels 7, and performs pivotal movements about an imaginary axis directed parallel to the frame beam 1 owing to the unevennesses in the soil, the lowermost end of the coupling member 42 is continuously in contact with the pressure member 61 then projecting in front of the face 57. As is apparent from Figure 9, the pressure member 61 exerts about the pivot shaft 44 a moment which is directed clockwise, as a result of which the rear end of the lever 45, and hence also the lower end of the spring 47, is located in a lowermost position. This lowermost position corresponds to that of the rod 46 and of the cup 49, so that the locking bar 28 bearing on and sliding over the plate 53 is located above the pin 50 (Figure 12), thus allowing the machine to adjust itself freely pivotally relative to the tractor. For the size of the spring 58 is such that the forces occurring in the top rod of the lifting hitch during the said pivotal movements of the machine can be counter-balanced without or with very small pivotal movements of the coupling member 42 about the pivot shaft 44. Consequently, the spring 58 effects a free slidability of the locking bar 28 through the cup 49. During operation, the front side of the stop plate 62 serves as the stop whereagainst the coupling member 42 can bear in cooperation with the spring 58.

When the machine is lifted by means of the three-point lifting hitch of the tractor, there occurs in the top rod thereof a comparatively large force owing to the machine's weight, which force, as seen in the side view of Figure 9, causes the coupling member 42 to pivot counterclockwise about the pivot shaft 44, as a result of which the spring 58 is compressed to the extent that the pressure member 61 is pushed completely into the space enclosed by the housing 56 and the lowermost end of the coupling member 42 bears against the end face 57 then serving as a stop therefor. As a result of this, the pin 50 is moved in one of the apertures 39 in the locking bar, thereby locking same relative to the trestle. Consequently, the frame beam 1 together with the operating members attached thereto are no longer capable of sideward movement relative to the tractor, because the pivotal movement of the arms 16 about the pivot shafts 17 and 18 is blocked. In case, prior to the lifting of the machine, the pin 50 is not located below any one of the apertures 39, the tractor driver first lifts the machine to such an extent that only part of its weight it taken up by the lifting hitch, subsequently drives a small turn and finally lifts the machine as a whole, as a result of which the pin 50 will enter into one of the apertures 39. The entering of the pin 50 into an aperture 39 is facilitated by the tapering design of both the pin 50 and the aperture 39.

This tapering design of pin and aperture also plays a part when the machine is set down after e.g. at the head of the field a 180° turn has been driven with the machine in lifted condition. This is also the case when the machine is arranged in an oblique position behind the tractor and owing thereto, during setting down, is subjected to transverse forces exerted on the ground wheels, in particular when, in addition, there has been driven a turn which increases said transverse forces. During setting down of the machine, the pin which then is to withdraw from the aperture is subjected to comparatively large transverse forces exerted by the boundary 55 of the aperture 39. The tapering design of pin and aperture effects that only a small downward axial displacement of the pin 50 relative to the aperture 39 (caused by the spring 58) already produces a certain clearance between the pin still present in the aperture and the aperture's boundary, so that the friction between them ceases to exist and the pin is allowed to withdraw further therefrom.

The presence of the spring 58 and the pressure member 61 achieves that, during lifting of the machine, due to a comparatively small pivotal movement of the coupling member 42 about the pivot shaft 44 the machine is tilted to a comparatively lesser extent rearwardly and downwardly relative to the lifting hitch, so that the height over which the machine has to be lifted (e.g. in order to be lifted across a swath) is considerably less than with prior art machines wherein, comparatively speaking, the pivotal movement of the coupling member 42 and the rearward tilt ensuing therefrom are considerably larger.

When, during operation, the machine drives across the field, there will occur owing to unevennesses in the soil a reciprocating tilting movement about an imaginary transverse axis, which movement in the region of the machine's attachment to the lifting hitch could give rise to jolting forces and also could change continuously the distance between the rake members' tine points and the soil or the stubbles, thus adversely affecting the working results of the machine. This continuous tilting movement is suppressed considerably due to the presence of the spring 58 and the pressure member 61 bearing against the lowermost part of the coupling member 42, which pressure member 61 projects in front of the end face 57 during operation.

Near its front end, the locking bar 28 is provided with an aperture 28A which in a position suitable for transportation of the machine, in side view, coincides with apertures 14A arranged rigidly relative to the trestle 14 (Figure 9). For security reasons there is inserted through said apertures 14A and 28A by hand a locking pin prior to transportation of the machine; of course, this locking pin should be removed prior to starting its operation.

However, it is also possible that the tractor driver will forget to insert the locking bar through the apertures 14A and 28A, so that, during transportation by public road, the danger arises that the greater part of the then lifted machine, pivoting about the pivot shafts 18, is displaced laterally in an unwanted manner when e.g. very strong vertical accelerations would occur owing to a very bad road surface condition. In case of strong shocks, the coupling member 42 might move about the pivot shaft 44 to such an extent that the pin 50 leaves the aperture 39 notwithstanding the action of the spring 58. In order to provide an absolute security during transportation by public road, there is proposed an automatic locking as is shown in Figure 13. The parts denoted by the reference numerals 28, 39, 46 and 49 to 55 relate to the same construction as those shown in Figure 12.

To the latter, above described construction there is added a very simple hydraulic cylinder 74, which is arranged in the immediate vicinity of the cup 49. The centre line of the cylinder 74 extends approximately horizontally and is directed perpendicularly to that of the rod 46. The cylinder 74 is rigidly mounted on an approximately horizontal supporting plate 75, which is rigidly attached to the trestle 14. The cylinder 74 includes a piston 76 attached to a piston rod 77. The piston rod 77 emerges from the cylinder 74 at the side facing the cup 49. At the emerging end of the piston rod 77 there is provided a locking member 78 which with its flat bottom side rests on and is slidable over the upper side of the supporting plate 75. The locking member 78 includes a stop 79 capable of bearing against the adjacent end of the cylinder 74. Seen in the view as shown in Figure 13, the locking member 78 has an upper face 80 which provides a wedge-shape thereto and, taken from its free end, extends obliquely upwardly into the direction of said cylinder 74. At its bottom side, the cup 49 is provided with an equally wedge-shaped bottom member 81 which, at its side facing the locking member 78, is bounded by a bevelled sliding face 82 which, at least in the locked condition, completely fits to the upper face 80 of the locking member 78.

Between the end face of the cylinder 74 partly enveloping the piston rod 77 and the piston 76, there is arranged about said piston rod 77 a pressure spring 83.

In the end wall 84 of the cylinder 74 facing away from the locking member 78 there is arranged a connection of an hydraulic line 85. The hydraulic line 85 is connected to the hydraulic supply line of a (further to be discussed) hydraulic cylinder 68 (Figure 8), by means of which hydraulic fluid is supplied under pressure to said cylinder 68 when (further to be discussed) carriers 67 carrying the outer rake members 3 are pivoted upwardly into a transportation position. Inside the hydraulic cylinder 74, that portion of the space accommodating the spring 83 is not filled with hydraulic fluid and is in open connection with the outer air.

During normal operation of the machine, the two carriers 67 are capable of moving freely in upward and downward direction to some extent relative to the main frame beam 64 under the influence of the unevennesses in the soil. In this case, the hydraulic fluid present between the end wall 84 and the piston 76 is almost unpressurized. Then, the pressure spring 83 is dimensioned such that the piston 76 is in the position as shown in Figure 13, in which position the stop 79 bears against the adjacent end wall of the cylinder 74. In this case, as seen in Figure 13, the locking member 78 is located as a whole to the left-hand side of the cup 49.

As has been set out in the preceding, when the tractor driver lifts the machine by means of the lifting hitch of the tractor, the cup 49 moves in the upward direction until the pin 50 enters into any one of the conical apertures 39. When subsequently the driver pivots the carriers 67 upwardly into a transportation position by means of the hydraulic cylinder 68, then the hydraulic fluid present between the end wall 84 and the piston 76 is pressurized due to this upward pivoting movement of the carriers 67. The dimensioning is such that the force exerted hereby on the piston 76 compresses the spring 83, as a result of which the piston 76, the piston rod 77 and the locking member 78 are displaced into the direction D. Consequently, the locking member 78 slides below the cup 49, so that, when the carrier 67 is folded upwardly (i.e. the transportation position during driving by public road), the pin 50 is prevented from leaving the aperture 39 in question. As a result, it is impossible for the machine to swivel away sidewardly all of a sudden owing to vigorous vertical jolts.

When the tractor driver first folds the carriers 67 upwardly while the machine still rests on the soil, then the locking member 78 slides against the sliding face 82 of the bottom member 81. In this situation, however, the locking member 78 is incapable of pushing the cup 49 upwardly via the shoulder 48A, the lever 45 and the coupling member 42 counter to the force of the rigid spring 58. Not until the driver lifts the machine, the cup 49 is moved upwardly, thus allowing the locking member 78 to slide below the bottom member 81 and thereby effecting a safe transportation position. It should be noted that in the locking position it may be desirable to have some clearance between the faces 80 and 82, which clearance, preferably, is half the height of the pin 50. In this position, however, the locking member 78 may also bear against said bottom member 81.

In case it is desirable to carry out the above-described transition into the transportation position in the reversed direction, the driver can first fold the carriers 67 downwardly prior to placing the machine onto the soil. Then, the space between the end wall 84 and the piston 76 is not pressurized (e.g. being in connection with the fluid tank of the hydraulic system of the tractor). The spring 83 presses the piston 76 into the direction of the end wall 84, so that the locking member 78 is displaced into the direction of the cylinder 74 until the stop 79 bears thereagainst. When subsequently the machine is placed onto the soil, the cup 49 is capable of moving freely in the downward direction, whereby the pin 50 leaves the aperture 39 and the machine is coupled freely pivotable behind the tractor.

When the driver first places the machine onto the soil, the cup 49 is at first incapable of downward movement or only capable thereof over a small height, so that the pin 50 does not leave the aperture 39 completely. However, when the driver subsequently folds the carriers 67 downwardly to their freely pivotal position suitable for operation, then the space between the end wall 84 and the piston 76 is unpressurized. Then, the pressure spring 83, in combination with the horizontal component of the force exerted by the bevelled face 82 on the thereto parallel upper face 80 of the locking member 78, is capable of displacing the locking member 78 into a direction counter to the direction D. Due to the downward movement of the cup 49, the pin 50 then leaves the aperture 39 in question completely so as to allow the machine to be freely pivotal relative to the tractor. When the locking arrangement according to Figure 13 is employed, it is, of course, possible to omit the locking pin to be inserted through apertures 14A and 28A.

As is apparent from Figure 8, near their associated pivot shafts 18, the two arms 16 are provided with stops 63. The vertical outer boundary faces of the stops 63 enclose such an angle with the vertical outer boundary faces of the arms 16 that the outer boundaries of the stops 63 bear against the trestle 14 when the frame beam 1 e.g. assumes a position corresponding to that as shown in Figures 4 and 5. The arrangement of the stops is chosen such that, when a stop bears against the trestle 14, one of the rake members cannot contact e.g. the tyre of one of the tractor wheels or a side of the trestle 14.

As is apparent from Figure 8, the machine shown therein is designed as a haymaking machine comprising a main frame beam 64 which near its ends carries bearing-supported rake members, which members are supported by means of ground wheels. Closely adjacent to the gear boxes 65 bearing-supporting the rake members and by means of which they are drivable, the main frame beam 64 includes horizontal pivot pins 66 extending perpendicularly to the longitudinal direction thereof, about which pivot pins 66 there are capable of pivotal movement upwardly and downwardly carriers 67 which at their ends facing away from the main frame beam 64 bearing-support outer rake members. In case the main frame beam 64 is directed parallel to the carriers 67, their centre lines will coincide. In order to pivot the machine into a position suitable for transportation, the carriers 67 are folded upwardly through an angle of 90° or more by means of a (schematically shown) hydraulic cylinder 68 bridging the main frame beam 64 . The rake members bearing-supported at the outer ends of the carriers 67 have haymaking tines which in said transportation position project outwardly and, during transportation by public road, might present a danger to people passing by. For the use during normal operation, there are arranged screening bows 69 to prevent people from approaching the rotating rake members too closely. Seen in plan view, the during normal operation horizontally arranged screening bows 69 screen off the front sides of the rotational paths followed by the rake members' tines and, if so desired, the rear sides thereof as well. Each screening bow 69 is mounted capable of pivotal movement relative to its associated carrier 67 by means of a simple pivot sleeve 70, which pivot sleeves together constitute a pivot axis extending parallel to their associated carriers 67. Since the centre of gravity of a screening bow is located at some distance in front of the pivot sleeves 70, there is arranged a spring 71 counter-balancing the weight of a screening bow 69. To an adjacent gear box 65 there is fitted an obliquely forwardly and outwardly extending support 72 which at its end carries a tube 73 folded through 90°, the horizontal leg of which tube extends to below the adjacent screening bow and partly carries the weight thereof. The other leg of the folded tube 73 extends from the end of the support 72 upwardly and is located near a part of the screening bow 69 carried by the horizontal leg. In the working position of the machine, the supports 72 and the screening bows 69 are located approximately in the same horizontal plane, in which case the screening bows 69 are arranged above the rake members, at least above the tine points.

When the carriers 67 are folded upwardly about the pivot pins 66 into the transportation position by means of the hydraulic cylinder 68, then the parts of the screening bows 69 located near the associated tubes 73 move towards the respective upright legs thereof, since, seen in the direction of operative travel, said upright legs are arranged at a short distance outside the adjacent pivot pins 66 and the tubes 73 are fitted rigidly to the gear boxes 65 associated with the main frame beam 64. During the upward pivotal movement of the carriers 67, the screening bows 69 contact the upright legs in such a manner that, relative to the carriers 67 as well as relative to the raking members attached thereto, they pivot along the front sides of the raking members into the direction of the tine points, whereby the forces inside the springs 71 increase. The dimensioning is such that, when the carriers 67 have reached their approximately vertical end position, the screening bows 69, relative to the upwardly pivoted raking members attached to the carriers 67, are pivoted to such an extent that, seen in the direction of operative travel, they are located at the outer sides of the plane wherein the tine points of the upwardly pivoted raking members are situated. In this manner, the pivoted screening bows 69 screen off the upwardly folded raking members at their outer sides and prevent, also in this position, people present in the vicinity of the sides of the transported machine from being hurt. It is, of course, also possible to arrange such screening bows, which have a screening function in the working position as well as in the transportation position, to the rear sides of the carriers 67.

The above-described constructions may alternatively be employed in machines of a different type, e.g. mowers, sprayers and fertilizer spreaders.

The invention is not limited to the features as described in the description and as claimed in the claims, but also includes any combination of measures as described in the description and illustrated in the drawings.

## Claims

1. An agricultural machine which can be coupled to a tractor by means of a connecting element (14; 14, 26, 19; 19, 26), which machine, during operation, bears on the soil by means of supporting members (17), the machine further being provided with a coupling device (10), with the aid of which the machine is pivotal relative to said connecting element about an upwardly directed virtual axis (20, 27), which, seen in plan view, is located in front of the connecting element, characterized in that the machine, during operation, is freely pivotable around said axis, while the coupling device (10) is provided with arms of equal length, connecting the machine to the connecting element (14).

2. An agricultural machine as claimed in claim 1, characterized in that the virtual axis (20, 27) is an instantaneous pivot axis of the machine relative to the tractor, which axis moves relative to the tractor when the machine oscillates and that the distance between the instantaneous pivot axis (20, 27) and the three-point trestle or lift link drawbar (14) is at least approximately 40% of that between the trestle or lift link drawbar (14) and the centre of gravity of the machine.

3. An agricultural machine as claimed in any one of the preceding claims, characterized in that the symmetry plane extends in the direction of operative travel.

4. An agricultural machine as claimed in any one of claims 1 to 3, characterized in that the symmetry plane of the machine encloses an angle with the direction of operative travel.

5. An agricultural machine as claimed in any one of the preceding claims, characterized in that the supporting members (7) are immovably connected relative to the frame (1) of the machine.

6. An agricultural machine as claimed in any one of the preceding claims, characterized in that, seen in plan view, the location of the virtual axis (20, 27) relative to a three-point trestle or lift link drawbar (14) serving as a connecting means to the tractor is determined by the point of intersection of connecting lines through the centre lines of pivot shafts (17, 18) of a, during operation, deformable coupling device (10) of the machine.

7. An agricultural machine as claimed in claim 6, characterized in that, taken in the direction of operative travel, the coupling device (10) comprises two converging, forwardly directed arms (16), the rear ends of which are located at some interspace and are connected to a frame (1) of the machine about upwardly directed rear pivot shafts (17) and the front ends of which are also located at some interspace and, during operation, are connected to the three-point trestle or lift link drawbar (14) capable of pivoting about upwardly directed front pivot shafts (18).

8. An agricultural machine as claimed in claim 6 or 7, characterized in that, seen in plan view, a connecting line through the front pivot shafts (18) extends in a normal operating position approximately parallel to a connecting line through the rear pivot shafts (17).

## Patentansprüche

1. Landmaschine, die mittels einer Anschlußvorrichtung (14; 14, 26, 19; 19, 26) an einen Schlepper anzubauen und in der Betriebslage mittels Stützgliedern (17) auf dem Boden abgestützt ist, und die eine Kupplungsvorrichtung (10) aufweist, mittels der die Maschine relativ zu der Anschlußvorrichtung um eine aufwärts gerichtete gedachte Achse (20, 27) schwenkbar ist, die sich in Draufsicht vor der Anschlußvorrichtung befindet, dadurch gekennzeichnet, daß die Maschine im Betrieb um die genannte Achse frei schwenkbar ist, und daß die Kupplungsvorrichtung (10) gleich lange Arme aufweist, welche die Maschine mit der Anschlußvorrichtung (14) verbinden.

2. Landmaschine nach Anspruch 1, dadurch gekennzeichnet, daß die gedachte Achse (20, 27) eine augenblickliche Schwenkachse der Maschine relativ zum Schlepper ist, die bei oszillierenden Bewegungen der Maschine ihre Lage zum Schlepper ändert, und daß der Abstand zwischen der augenblicklichen Schwenkachse (20, 27) und dem Dreipunkt-Anbaubock oder der Hubgestänge-Anbauschiene (14) mindestens ca. 40 % des Abstandes zwischen dem Anbaubock oder der Hubgestänge-Anbauschiene (14) und dem Schwerpunkt der Maschine beträgt.

3. Landmaschine nach einem der vorhergehenden Ansprüche, dadurch gekennzeichnet, daß sich die Symmetrieebene in Arbeitsrichtung erstreckt.

4. Landmaschine nach einem der Ansprüche 1 bis 3, dadurch gekennzeichnet, daß die Symmetrieebene der Maschine mit der Arbeitsrichtung einen Winkel bildet.

5. Landmaschine nach einem der vorhergehenden Ansprüche, daduch gekennzeichnet, daß die Stützglieder (17) unverrückbar mit dem Gestell (1) der Maschine verbunden sind.

6. Landmaschine nach einem der vorhergehenden Ansprüche, dadurch gekennzeichnet, daß in Draufsicht die gedachte Achse (20, 27) relativ zum Dreipunkt-Anbaubock oder zur Hubgestänge-Anbauschiene (14), die dem Anschluß an den Schlepper dienen, durch den Schnittpunkt der Verbindungsgeraden mit den Mittellinien der Schwenkachsen (17, 18) der während des Betriebs formveränderlichen Kupplungsvorrichtung (10) der Maschine verläuft.

7. Landmaschine nach Anspruch 6, dadurch gekennzeichnet, daß die Kupplungsvorrichtung (10) in Arbeitsrichtung zwei nach vorne konvergierende Arme (16) aufweist, deren hintere Enden getrennt voneinander angeordnet und mit dem Gestell (1) der Maschine über aufwärts gerichtete hintere Schwenkachsen (17) verbunden sind, und deren vordere Enden ebenfalls getrennt voneinander angeordnet und in Betriebslage mit dem Dreipunkt-Anbaubock oder der Hubgestänge-Anbauschiene (14) verbunden sind und über aufwärts gerichtete vordere Schwenkachsen (18) geschwenkt werden können.

8. Landmaschine nach einem der Ansprüche 6 oder 7, dadurch gekennzeichnet, daß sich in Draufsicht und in normaler Arbeitsstellung eine Verbindungsgerade durch die vorderen Schwenkachsen (18) annähernd parallel zu einer Verbindungsgeraden durch die hinteren Schwenkachsen (17) erstreckt.

## Revendications

1. Machine agricole pouvant être attelée à un tracteur au moyen d'un élément de liaison (14; 14, 26, 19; 19, 26), laquelle machine, pendant le travail, repose au sol au moyen d'organes de support (7), la machine étant pourvue en outre d'un dispositif de couplage (10), à l'aide duquel la machine peut pivoter par rapport audit élément de liaison autour d'un axe virtuel (20,27) dirigé vers le haut, qui est situé, en étant vu en plan, en avant de l'élément de liaison,
**caractérisée** en ce que la machine peut, au cours du travail, pivoter librement autour dudit axe, tandis que le dispositif de couplage (10) est muni de bras de longueur égale, reliant la machine à l'élément de liaison (14).

2. Machine agricole selon la revendication 1, caractérisée en ce que l'axe virtuel (20, 27) est un axe de pivotement instantané de la machine par rapport au tracteur, lequel axe se déplace par rapport au tracteur quand la machine oscille, et en ce que la distance entre l'axe de pivotement instantané (20, 27) et le chevalet d'attelage à trois points ou la barre d'attelage/levage (14) est au moins approximativement 40% de celle entre le chevalet ou la barre d'attelage/levage (14) et le centre de gravité de la machine.

3. Machine agricole selon l'une quelconque des revendications précédentes, caractérisée en ce que le plan de symétrie s'étend dans le sens de marche du travail.

4. Machine agricole selon l'une quelconque des revendications 1 à 3, caractérisée en ce que le plan de symétrie de la machine forme un angle avec le sens de marche du travail.

5. Machine agricole selon l'une quelconque des revendications précédentes, caractérisée en ce que les organes de support (7) sont reliés de manière immuable par rapport au châssis (1) de la machine.

6. Machine agricole selon l'une quelconque des revendications précédentes, **caractérisée** en ce que, en étant vu en plan, l'emplacement de l'axe virtuel (20, 27) par rapport à un chevalet à trois points ou par rapport à une barre d'attelage/levage (14) servant de moyen de liaison avec le tracteur est déterminé par l'intersection de lignes de jonction passant par les axes des arbres de pivotement (17, 18) d'un dispositif de couplage (10) de la machine, lequel est déformable au cours du travail.

7. Machine agricole selon la revendication 6, caractérisée en ce que, en étant vu dans le sens de marche du travail, le dispositif de couplage (10) comprend deux bras convergents (16) dirigés vers l'avant, dont les extrémités postérieures sont situées à un certain espacement entre elles et sont reliées à un châssis (1) de la machine autour d'arbres de pivotement postérieurs (17) dirigés vers le haut et dont les extrémités antérieures sont également situées à un certain espacement entre elles et sont reliées, au cours du travail, au chevalet à trois points ou à la barre d'attelage/levage (14), lesdits bras (16) étant capables de pivoter autour d'arbres de pivotement antérieurs (18) dirigés vers le haut.

8. Machine agricole selon la revendication 6 ou 7, caractérisée en ce que, en étant vue en plan, une ligne de jonction passant par les arbres de pivotement antérieurs (18) s'étend, dans une position normale de travail, approximativement parallèlement à une ligne de jonction passant par les arbres de pivotement postérieurs (17).
